# EUROPEAN PATENT SPECIFICATION

(11) **EP 1 335 881 B1**
(45) Date of publication and mention of the grant of the patent: **02.06.2004**
(21) Application number: 00975010.0
(22) Date of filing: 27.09.2000
(51) Int. Cl.: C02F 1/00, C01D 7/18

(54) **PROCESS FOR DESALINATION OF SEAWATER**
VERFAHREN ZUR ENTSALZUNG VON MEERWASSER
PROCEDE DE DESSALEMENT D'EAU DE MER

(43) Date of publication of application: 20.08.2003
(73) Proprietor: Rongved, Paul, North Miami Beach, FL 33160 (US)
(72) Inventor: Rongved, Paul, North Miami Beach, FL 33160 (US)
(74) Representative: Jorritsma, Ruurd
(86) International application number: PCT/NO2000/000317
(87) International publication number: WO 2001/096243

(56) References cited:
- DE-A1- 3 146 326
- DATABASE WPI Week 197318, Derwent Publications Ltd., London, GB; AN 1973-25426U, XP002936916 & JP 48 013 671 B (IKUNO S) 28 April 1973

## Description

The present invention relates to a process for the desalination of sea or brackish water.

### BACKGROUND OF INVENTION

Water for communities, agriculture and industry is more and more needed, and not available in many areas of the world. Seawater can not be used because it contains salt, and existing methods for removing salt are slow, difficult and costly, and require much energy. Energy consumption is increasing world wide and most of it is produced by combustion of oil, gas coal, wood and other organic material, which are polluting the environment.

Environmental scientists from all over the world are now recommending that carbon dioxide (CO₂) now being produced and discharged to the environmental air be reduced, to protect the environment from the bad greenhouse effect CO₂ gases have. Many nations have therefore now committed themselves to reduce their C02 emission as a legal requirement.

The present invention is therefore of great importance indeed, providing a practical process, at low cost, for producing large quantities of desalted seawater, using CO₂ for the process from combustion exhaust which other wise would be contaminating the environment. No existing economical process provides simultaneously these results although other processes are using similar chemicals. Particularly the ammonia soda ash process, which Ernest Solvay improved in 1865, by saturating concentrated solution of sodium chloride with ammonia and passing carbon dioxide through it to obtain soda ash.

### SUMMARY OF INVENTION

The above and other objects and advantages are obtained in accordance with the present invention comprising a chemical process for desalination of seawater, and removal of CO₂ from exhaust. Salt molecules (NaCl) have a strong internal bond between the Na- and Cl-atoms, which will be broken up in two steps.

In the first step of the present invention a catalyst being ammonia NH₃ will be metered and mixed with seawater which has about 3 weight% of salt to be removed. The ammonia mixes readily with water and forms NH₄OH, which contains very agressive reactant molecules. They have strong attraction and are pulling on the Cl-atom of the salt molecules in the seawater. This reduces the internal bond, and make the salt more vulnerable.

The second step of said process is performed in an enclosed process chamber, located above a clarifier. Combustion exhaust gas, rich in CO₂ and normally discharged to the sky harming the environment, is being used for the process. The gas enters through inlet on one side and remains in the chamber for processing. The remaining gas leaves at outlet on the other side. The seawater mixture is pumped into the process chamber to numerous outlets near the top and disperse as non clogging mist.

The CO₂ gas molecules are attracted to the Na atom of the salt, further weaken and break the salt molecule apart in the mist of seawater. Two heavy solids are formed, and they settle in the clarifier and are removed in under flow outlet.

The desalted seawater over flows from the clarifier in large quantities per ton of salt, since salt is only present in about three percent in seawater. The desalted seawater can then be used for communities, industries and agiculture. It still contains some dissolved ammonia and plankton and other organisms ,which in the ocean are nutrients for other sea life. These nutrients can also be used to fertilize soil for farming. Alternatively, where needed, they can be removed from the water by intense aeration and by a biological process, or by non clogging filters. The colloidal material flocculates and is recovered as sludge or filter cake.

The two solids for the breakup of the salt, and removal of the CO₂ gas are: Sodium carbonate Na₂CO₃ with specific gravity 2.53, and ammonium chloride NH₄Cl with specific gravity 1.53.

The two solids can be separated by hydro cyclone separator, air conveyor and spray, or by other means. There are growing markets and good prices for sodium carbonate. It may pay for the total process and more, rendering the desalted seawater free of charge. The ammonium in NH₄Cl can be recycled by thermal treatment with calcium oxide CaO, or be converted to NH₃ and HCl.

The chemical formula (or equation) for the reaction for the salt break up with seawater as carrier and 3 weight percent salt an 1 ton of salt being removed is:

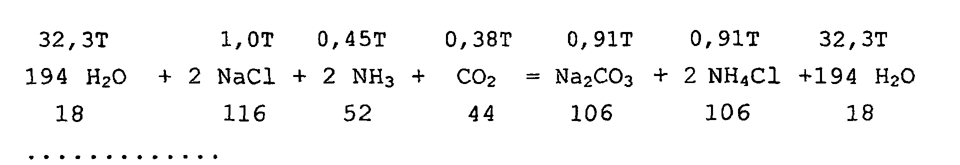

The abbreviation T meaning: ton in weight.
The numbers of the last line represent the molecular weights of the compounds of the equation.

The method according to the invention may be carried out with a process chamber including a top plate and a cylindrical wall, above a clarifier with a cylindircal wall connected to a conical bottom with a sump pit. The entrance pipe with numerous dispersing spray outlets is supplying seawater mixed with ammonia. The entrance duct is supplying combustion exhaust with CO₂ gas to the process chamber. The exit duct is removing remnant exhaust gas.

The over flow weir and the over flow pipe are discharging seawater with salt removed. The splash boards and the ring over flow cover are catching and splashing the water for additional salt removal. The pipe conveyor is removing the under flow from the pit by air injection, which mixes and lightens the material from the pit and sprays it out into the separator. The air is removed at the top of the separator.

### DESCRIPTION OF SPECIFIC EMBODIMENTS

An improved processing method or plant, in accordance with the present invention, with molecular breakdown and beneficial reduction of salt in-situ in seawater or other salt water, is achieved in a continuous chemical process performed in one or more enclosed process chambers, each located above a clarifier, and arranged in tandem or parallel.

Exhaust gas rich in CO₂ normally discharged when combusting gas, oil or coal power plant, furnaces and other combustion apparatuses, and is harmful to the environment when reaching the upper atmosphere.

The exhaust gas is being diverted to the process chambers and the CO₂ gas used for the process as it is being removed from the exhaust. The seawater has ammonia as a catalyst added and mixed in, in balanced quantities with the salt, to weaken the inner bond of the salt, before the seawater is pumped into the process chamber and dispersed as a fine spray at numerous points near the top. And the fine spray hits one or more plash boards, as the CO₂ gas acts there as a strong reactant, connect to the weakened salt molecules and tear them apart.

Two heavy solids form with atoms from the salt, ammonia, CO₂ and water, and are removed. Namely the compounds of sodium carbonate and ammonium chloride.

In the clarifier below the seawater with salt removed is discharged as overflow from the clarifier and heavy solids settle and are removed as underflow and can then be recovered.

The number of process chambers can be used in different ways. If two, three or more chambers axe arranged in parallel, there is a proportional reduction per square meter of the chamber area, in flow of the seawater, salt, ammonia and CO₂ and increased desalination of seawater.

As another example, if there are three similar process chambers arranged in tandem and the combustion exhaust flows from one to the second to the third and remnant exhaust exhaust is then discharged there, the seawater mixed with ammonia may be pumped into the second chamber and is processed there.

But if the processed seawater still contains too much salt, it may be checked for sufficient ammonia and pumped into the first process chamber for a polishing process to meet the desalination requirements.

A small portion of mixed seawater pumped, can be diverted and sprayed into the third process chamber for a polishing process to remove remnant CO₂ gas when required.

The process of the invention is mainly for seawater that has a relative uniform salt content. Seawater contains about three weight percent salt, but the percentage will vary in accordance to location. In Fjords and narrow bays, that are receiving large volumes of fresh water the percentage of salt will be less. In tropical zones and shallow water the salt content is higher, but generally itdoes not exceed 4 percent by weight.

Magnesium, calcium and potassium exist in very small proportion in seawater compared with the sodium salt. These metals are needed in most living cells, and a portion of them may be removed in the described process.

The seawater also contains plankton and other micro organisms, which in the ocean act as important nutrient for other sea life.

These micro organisms can also act as fertilizer when desalinated seawater is used for agriculture in arid or semiarid locale, where increasing population and draught make desalinated seawater an extremely valuable resource, as in California, Hong Kong and The Middle East. In the Arabic States much gas from oil wells is flared, and CO₂ gas from combustion can be captured and removed in my process to avoid pollution of the atmosphere. The gas can be used as fuel for electric power.

The exhaust from these can be diverted and the harmful CO₂ gas can be removed and used in the invented process for desalination of seawater in large quantities, which then can be available to make the land productive for agriculture. Ammonia is now produced in large quantities at low cost so recycling may not be needed or cost effective. It shall be understood that saltwater other than seawater can be used as an alternate in this invention and a maximum concentration of 22 percent of salt is being used, to avoid clogging and provide a reliable process.

This invention has been disclosed with respect to certain preferred embodiments and it shall be understood that various modifications and variations thereof, obvious to those skilled in the art, will be included within the scope of the appended claims.

## Claims

1. A process for desalination of sea or brackish water, comprising mixing ammonia (NH₃) into said water to form an effective amount of ammonium hydroxide, NH₄OH to react with NaCl salt molecules present in said water and weakened said bond in said NaCl molecules; spraying said water as a fine spray near the top in an enclosed process chamber; exposing the sprayed water to an effective amount of CO₂ combustion exhaust gas to react with said weakened salt molecules and form and remove sodium carbonate (Na₂CO₃) and ammonium chloride (NH₄Cl) solids in a clarifier below said process chamber, settling and removing solids through an underflow outlet pipe and discharging desalinated water as an overflow from said clarifier.

2. A process as in claim 1, wherein said process chamber is provided with splash boards to catch and splash said water for additional salt removal.

3. A process as in claim 1, wherein said water has a maximum salt concentration of 22 percent to avoid clogging during the process.

4. A process as in claim 1, wherein said process is performed in two or more chamber arranged in tandem or parallel for maximum salt removal.

## Patentansprüche

1. Verfahren zum Entsalzen von Meerwasser oder Brackwasser, das umfasst: Einmischen von Ammoniak (NH₃) in dieses Wasser unter Bildung einer wirksamen Menge an Ammoniumhydroxid NH₄OH, das mit NaCl-Salzmolekülen, die in diesem Wasser enthalten sind, unter Schwächung der Bindung in den NaCl-Molekülen reagiert; Versprühen dieses Wassers in Form eines feinen Sprühnebels im oberen Teil einer geschlossenen Prozeßkammer, Einwirkenlassen einer wirksamen Menge an CO₂-Verbrennungsabgas auf das versprühte Wasser, um das CO₂ mit den Salzmolekülen, deren Bindung geschwächt ist, reagieren zu lassen unter Erzeugung von Natriumcarbonat (Na₂CO₃) und Ammoniumchlorid (NH₄Cl). Entfernen des Natriumcarbonats und des Ammoniumchlorids in Form von Feststoffen in einer Klärvorrichtung unterhalb dar Prozeßkammer, Absetzenlassen der Feststoffe und Entfernen der Feststoffe als Unterlauf durch ein Ablaßrohr und Abfließenlassen von entsalztem Wasser als Überlauf aus der Klärvorrichtung.

2. Verfahren nach Anspruch 1, wobei die Prozeßkammer für die zusätzlieche Salzentfemung mit Spriizblechen zum Auffangen und Verspritzen dieses Wassers ausgestattet ist.

3. Verfahren nach Anspruch 1, wobei dieses Wasser eine maximale Salzkonzentration von 22 Prozent aufweist, um ein Verstopfen während der Durchführung des Verfahrens zu vermeiden.

4. Verfahren nach Anspruch 1, wobei das Verfahren für eine maximale Salzentfernung in zwei oder mehr Kammern durchgeführt wird, die hintereinander oder parallel zueinander angeordnet sind.

## Revendications

1. Procédé de dessalement d'eau de mer ou saumâtre, comprenant le mélange d'ammoniac (NH₃) dans ladite eau pour former une quantité d'hydroxyde d'ammonium NH₄OH efficace pour réagir avec les molécules de sel NaCl présentes dans ladite eau et ladite liaison appauvrie dans lesdites molécules de NaCl; la pulvérisation de ladite eau en un jet fin proche du sommet dans une chambre de traitement confinée; l'exposition de l'eau pulvérisée à une quantité efficace de gaz d'échappement de combustion de CO₂ pour réagir avec lesdites molécules de sel appauvries et pour former et retirer le carbonate de sodium (Na₂CO₃) et les matières solides de chlorure d'ammonium (NH₄Cl) dans un clarificateur en dessous de ladite chambre de traitement, en décantant et en retirant les matières solides au travers d'une conduite d'évacuation de fond et en rejetant l'eau dessalée dudit clarificateur en trop-plein.

2. Procédé selon la revendication 1, dans lequel ladite chambre de traitement est équipée de panneaux anti-éclaboussure pour récolter et projeter ladite eau pour une extraction supplémentaire du sel.

3. Procédé selon la revendication 1, dans lequel ladite eau présente une concentration maximum en sel de 22 % pour éviter l'engorgement au cours du procédé.

4. Procédé selon la revendication 1, dans lequel ledit procédé est exécuté dans deux ou plusieurs chambres disposées en tandem ou en parallèle pour une extraction maximale du sel.
